# EUROPEAN PATENT APPLICATION

(11) **EP 3 763 915 A1**
(43) Date of publication of application: **13.01.2021**
(21) Application number: 18908710.9
(22) Date of filing: 09.03.2018
(51) Int. Cl.: E21D 11/08, F16K 15/14

(54) **LEAKTIGHT ARRANGEMENT**

(71) Applicant: Acciona Construcción, S.A., 28108 Alcobendas (ES); GHELLA, SPA, 00195 Roma (IT)
(72) Inventor: VARA, Fernando, 28108 Alcobendas (ES); ARNANZ GONZÁLEZ, Jacobo, 28108 Alcobendas (ES); MAZZOCCHI, Paolo, 00195 Roma (IT); ORTU, Matteo, 00195 Roma (IT)
(74) Representative: Elzaburu S.L.P.
(86) International application number: PCT/ES2018/070179
(87) International publication number: WO 2019/170932

## Description

### OBJECT

The present invention relates to a watertight arrangement for a drilled hole in a lining element of a tunnel.

### STATE OF THE ART

It is currently known that in the excavation of a tunnel with a tunnel boring machine, the support of the ground during and after the excavation can be provided by placing lining elements such as concrete segment rings.

The tunnel boring machine has a cutter head whose external diameter is larger than the external diameter of the segment ring. After the tunnel boring machine has moved forward, a gap remains between the excavated ground and the lining, which is quickly filled with mortar to prevent subsidence on the surface and provide stability to the segment ring.

The segments incorporate a flexible elastomer seal on all of the lateral surfaces of the segment to provide a watertight seal for the segment ring assembly.

Mortar can be injected through mortar injection holes drilled in the segments. These holes usually have a threaded part to facilitate the operation. The mortar is a mixture of water, cement and aggregates with the necessary additives to limit shrinkage during curing and to provide self-levelling behaviour that facilitates the filling of the gap between the ground and the lining.

When the mortar injection has been completed, the drilled hole must be plugged with a plug to make the hole watertight and thus maintain the watertightness of the lining of the excavated tunnel.

### SUMMARY

The present invention seeks to solve one or more of the aforementioned disadvantages by means of a watertight arrangement as claimed in the claims.

The watertight arrangement can be inserted into a hole, for the injection of a mortar, drilled into an element of the lining of an excavated tunnel in order to provide the hole with watertightness and to retain the watertight device inside the hole, once a stage of injecting fill mortar into the cavities between the lining and the tunnel has been completed.

The watertight arrangement comprises a bolt including a head and, at the opposite end, a first portion of exterior threads for threaded coupling with a first body, which has a hole with an internal axial thread, and a corrugated sleeve, which can be inserted between both the head and the first portion of exterior threads; the continuous rotation of the bolt, in the working position of the watertight arrangement inserted into the axial hole, allows the first body to advance towards the head until a plurality of projections of the corrugated sleeve provide a controlled watertight fit between the projections and the internal surface of the axial hole, exerting a controlled radial force towards the internal surface of the axial hole, which is a function of the value of the decrease in the axial length of the corrugated sleeve.

The corrugated sleeve is of the type of a hollow cylindrical pipe without internal threading and the plurality of projections arranged in parallel on the external surface of the sleeve along the axial length of the corrugated sleeve.

The plurality of projections can be arranged in the form of an external thread on the external surface of the corrugated sleeve.

The corrugated sleeve is made of a material such as plastic, rubber or a similar material, which recovers its original shape when an axial reduction force is no longer applied to the corrugated sleeve.

The bolt is a headed screw type bolt, with a forged head, with a second external thread portion at the end opposite the first portion of exterior threads or similar.

The watertight arrangement also includes a first perforated anti-friction body that can be inserted between the head of the bolt and the first end of the corrugated sleeve.

The watertight arrangement also includes a second perforated anti-friction body that can be inserted between the first body and the second end opposite the corrugated sleeve.

The watertight arrangement also includes a plug body that can be inserted between the first perforated body and the first end of the corrugated sleeve.

The plug body has a truncated cone-shaped body with the smaller external diameter arranged near the first end of the corrugated sleeve and the larger external diameter near the head of the bolt.

The plug body includes an axial hole with an internal thread for threaded coupling with the first portion of exterior threads, such that as the bolt is rotated, the plug body moves towards the first end of the corrugated sleeve penetrating into the axial hole of the corrugated sleeve in a controlled manner.

In summary, the continuous rotation of the bolt allows the first body to advance towards the head of the bolt such that the axial length of the corrugated sleeve is reduced in a controlled manner to achieve a predetermined watertight value in the drilled axial hole in the lining.

The drilled axial hole may or may not have an internal thread, that is, without internal threading.

### BRIEF DESCRIPTION OF THE DRAWINGS

A more detailed explanation of the invention is given in the following description based on the attached drawings, in which:
Figure 1 shows in a profile view a watertight arrangement for anchoring inside a drilled axial hole in a lining element, and
Figure 2 shows a perspective view the watertight arrangement.

### DETAILED DESCRIPTION

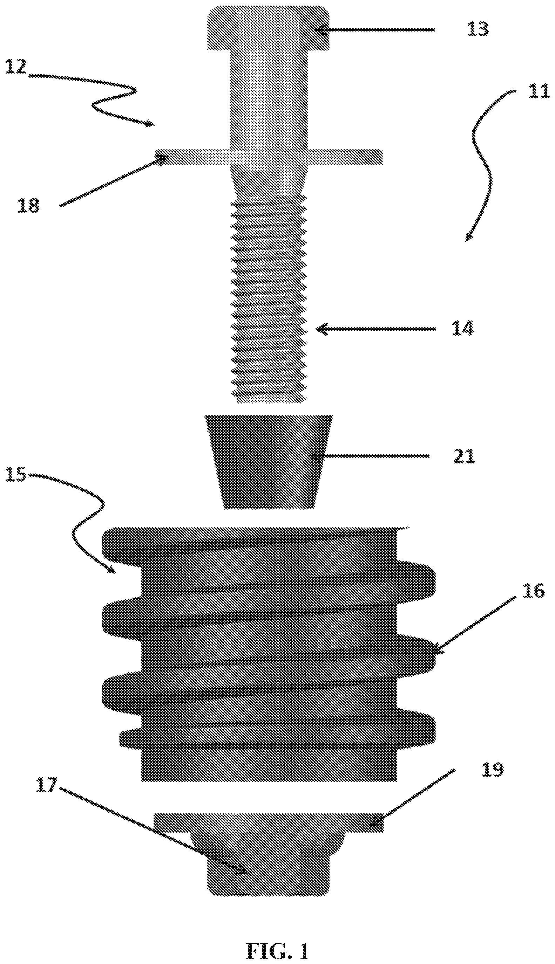

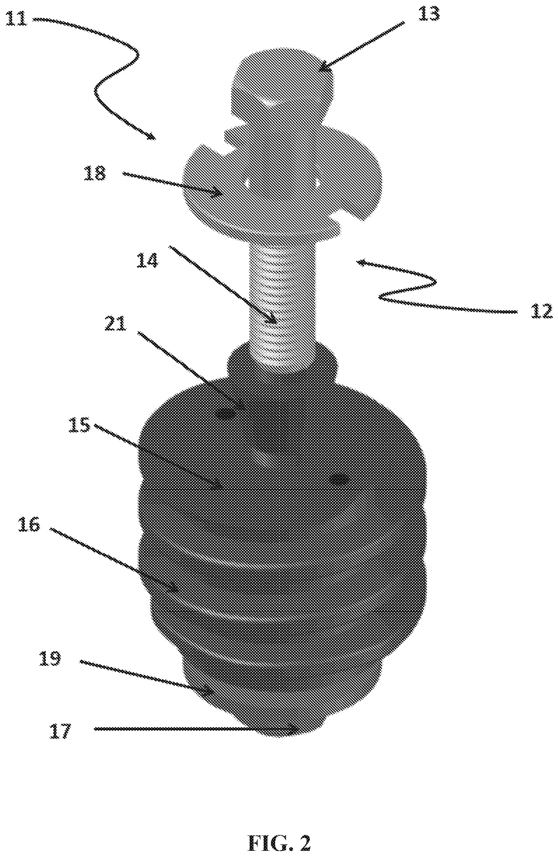

Figures 1 and 2 illustrate a watertight arrangement 11, which includes a bolt 12, a corrugated sleeve 15 and a first body 17, for anchoring inside an axial hole, drilled into a lining element of an excavated tunnel for injecting a mortar into cavities between the ground and a plurality of lining elements of the tunnel excavated in the ground.

The watertight arrangement 11 provides a characteristic of watertightness to the drilled axial hole after the mortar injection stage has been completed. The axial hole is drilled in at least one element of the concrete segment type lining and must be sealed to maintain the watertight characteristic of the segment ring.

The watertight arrangement 11 includes a bolt 12 that has a head 13 at one end and at the opposite end, a first portion of exterior threads 14 for threaded coupling with the first body 17, which has an a hole with an internal axial thread, and the corrugated sleeve 15 is arranged between the two ends of the bolt 12 such that the plurality of projections 16 of the corrugated sleeve 15 rest, with physical contact, against the internal surface of the drilled hole in the lining.

The continuous rotation of the bolt 12 allows the first body 17 to advance towards the head 13 of the bolt 12, that is, towards the entrance of the drilled axial hole on the first portion of exterior threads 14, until the corrugated sleeve 15 reaches the working position where the plurality of projections 16 of the corrugated sleeve 15 engage by friction with the surface of the drilled axial hole and exert a controlled radial force outwards, which is a function of the value of the decrease in the axial length of the corrugated sleeve 15, that is, the axial length of the corrugated sleeve 15 is precisely reduced in a controlled manner to increase the external diameter of the sleeve 15 creating a controlled watertight fit between the projections 16 of the corrugated sleeve 15 and the internal surface of the drilled axial hole.

With the corrugated sleeve 15 fitted against the internal surface of the drilled hole, the continuous rotation of the bolt increases the axial reduction force between the two ends of the corrugated sleeve 15.

The increasing axial reduction force is accompanied by an increasing radial force that forces the projections of the sleeve against the internal surface of the drilled hole to increase the friction between the external surface of the projections 16 and the internal surface of the drilled hole. The watertight arrangement 11 is kept in a fixed nonrotating position, thus allowing the first body 17 to advance towards the head 13 of the bolt 12.

The corrugated sleeve 15 is a type of sleeve 15 with parallel projections 16 evenly distributed along the axial length of the external surface of the sleeve 15; sleeve 15 with projections 16 arranged according to an external thread for threaded coupling with the internal surface of the drilled hole in the lining.

The bolt 12 is a screw type bolt with a head 13 and a first portion of exterior threads 14; bolt 12 with forged head and a first portion of exterior threads 14, bolt 12 with a second external thread portion and a first portion of exterior threads 14 or similar.

A first perforated anti-friction body 18 can be arranged between the head 13 of the bolt 12 and the first end of the corrugated sleeve 15; a second perforated anti-friction body 19 can be arranged between the first body 17 and the second opposite end of the sleeve 15 to keep the first body 17 tight against the head 13 of the bolt 12 and reduce friction between two adjacent pieces between which the first and second perforated bodies 18, 19 are inserted.

A plug body 21 has an axial hole, which can be arranged between the first perforated body 18 and the first end of the corrugated sleeve 15, to be coupled by penetration into the axial hole of the first end of the corrugated sleeve 15 to achieve the watertightness of the axial hole of the corrugated sleeve 15.

The plug body 21 has a truncated cone-shaped body with the smaller external diameter of the cone arranged near the first end of the corrugated sleeve 15 and the larger external diameter of the cone near the head 13 of the bolt 12.

The axial hole of the plug body 21 does not have an internal thread.

Alternatively, the axial hole of the plug body 21 has an internal thread for threaded coupling with the first portion of exterior threads 14 of the bolt 12, such that as the bolt 12 is rotated, the conical plug body 21 is moved from the head 13 of the bolt 12 towards the first end of the corrugated sleeve 15 penetrating into the axial hole of the corrugated sleeve 15 in a controlled manner.

The first perforated body 18 can be inserted between the head 13 of the bolt 11 and the base of the conical plug body 21 with the larger external diameter.

The conical plug body 21 works with the first body 17 to reduce the axial length of the sleeve 15 and to hold the watertight device 11 in working position and to provide watertightness to the drilled axial hole in the lining element.

The corrugated sleeve 15 with an unthreaded axial hole and the first and second body perforated bodies 18, 19 without rock are also received in a sliding manner on the bolt 12 and can rest against the head 13 of the bolt 12.

The corrugated sleeve 15 is continuous and has the shape of a hollow cylindrical tube with no cuts, grooves, axial divisions or similar to prevent it from breaking during the rotation stage of the bolt 12 until the watertight arrangement 11 reaches the working position. That is, a predetermined axial reduction force will cause the external diameter of the corrugated sleeve 15 to increase to provide watertightness to the drilled hole without breaking the sleeve.

The drilled hole in the lining may have an internal thread, be a drilled hole without an internal thread.

## Claims

1. A watertight arrangement for installation inside an axial hole; **characterised in that** the watertight arrangement (11) comprises a bolt (12) including a head (13) and, at the opposite end, a first portion of exterior threads (14) for threaded coupling with a first body (17), which has a hole with an internal axial thread, and a corrugated sleeve (15), which can be inserted between both the head (13) and the first portion of exterior threads (14); the continuous rotation of the bolt (12), in the working position of the watertight arrangement (11) inserted into the axial hole, allows the first body (17) to advance towards the head (13) until a plurality of projections (16) of the corrugated sleeve (15) provide a controlled watertight fit between the projections (16) and the internal surface of the axial hole, exerting a controlled radial force towards the internal surface of the axial hole, which is a function of the value of the decrease in the axial length of the corrugated sleeve (15).

2. The arrangement in accordance with claim 1, **characterised in that** the corrugated sleeve (15) is of the hollow cylindrical tube type.

3. The arrangement in accordance with claim 2, **characterised in that** the corrugated sleeve (15) is a hollow cylindrical tube with no internal threading.

4. The arrangement in accordance with claim 2, **characterised in that** the plurality of projections (16) are arranged in parallel on the external surface of the corrugated sleeve (15) along the axial length of the corrugated sleeve (15).

5. The arrangement in accordance with claim 2, **characterised in that** the plurality of projections (16) are arranged in the form of an external thread on the external surface of the corrugated sleeve (15).

6. The arrangement in accordance with claim 1, **characterised in that** the bolt (12) is a headed screw bolt type (13), with a forged head (13), with a second external thread portion or similar.

7. The arrangement in accordance with claim 1, **characterised in that** the watertight arrangement (11) comprises a first perforated body (18) that can be inserted between the head (13) of the bolt (12) and a first end of the corrugated sleeve (15).

8. The arrangement in accordance with claim 1, **characterised in that** the watertight arrangement (11) comprises a second perforated body (19) that can be inserted between the first body (17) and a second opposite end of the corrugated sleeve (15).

9. The arrangement in accordance with Claim 7, **characterised in that** the watertight arrangement (11) comprises a plug body (21) that can be inserted between the first perforated body (18) and the first end of the corrugated sleeve.

10. The arrangement in accordance with claim 9, **characterised in that** the plug body (21) has a truncated cone-shaped body with the smaller external diameter arranged near the first end of the corrugated sleeve (15) and the larger external diameter arranged near the head (13) of the bolt (12).

11. The arrangement in accordance with Claim 9, **characterised in that** the plug body (21) includes an axial hole with an internal thread for threaded coupling with the first portion of exterior threads (14), such that as the bolt (12) is rotated, the plug body (21) moves towards the first end of the corrugated sleeve (15) penetrating into the axial hole of the corrugated sleeve (15) in a controlled manner.

12. An element for the support of the ground of an excavated tunnel having at least one drilled axial hole for injecting a filler mortar into a gap between the excavated ground and the lining element; **characterised in that** the drilled axial hole is configured to receive a watertight arrangement (11) as defined in claims 1 to 11.
